# EUROPEAN PATENT SPECIFICATION

(11) **EP 2 721 041 B1**
(45) Date of publication and mention of the grant of the patent: **13.06.2018**
(21) Application number: 12777737.3
(22) Date of filing: 28.04.2012
(51) Int. Cl.: C07F 9/38, C07F 9/32, C07F 9/40, C08K 5/51, C08K 5/00, C08K 5/5317, C08K 5/5333

(54) **NEW COUPLING AGENTS FOR ELASTOMER COMPOSITIONS**
NEUE KUPPLUNGSMITTEL FÜR ELASTOMERZUSAMMENSETZUNGEN
NOUVEAUX AGENTS DE PONTAGE POUR COMPOSITIONS ÉLASTOMÈRES

(30) Priority: 29.04.2011 WO PCT/CN2011/073543
(43) Date of publication of application: 23.04.2014
(73) Proprietor: Rhodia (China) Co., Ltd., Shanghai 201108 (CN)
(72) Inventor: LIU, Zhaoqing, Shanghai 201108 (CN); DE CAMPO, Floryan, Shanghai 201108 (CN); GUY, Laurent, F-69140 Rillieux-la-Pape (FR); WILSON, David James, F-60580 Coye la Forêt (FR); JOST, Philippe, F-38200 Serpaize (FR)
(74) Representative: Delenne, Marc
(86) International application number: PCT/CN2012/074881
(87) International publication number: WO 2012/146198

(56) References cited:
- WO-A1-02/02057
- WO-A1-2005/059022
- US-A- 4 386 185
- US-A- 4 401 535
- US-A- 4 507 249

## Description

The present invention relates to new coupling agents for elastomer compositions. In particular, it relates to the use of specific conjugated diene compounds, such as phosphonate or phosphinate conjugated diene compounds, in elastomer compositions.

Most of elastomeric articles are especially subject to various stresses: for instance temperature variations, large frequency stress variations in a dynamic regime; a substantial static stress and/or a large strain fatigue in a dynamic regime. Such types of articles are, for example: tires, shoe soles, floorings, conveyor beltings, driving belts, flexible pipes, seals, in particular seals for household electrical appliances, supports acting as engine vibration extractors either with metallic armatures or with a hydraulic fluid inside the elastomer, cable sheaths, cables and rollers for cable cars.

It has been then proposed to use elastomeric compositions reinforced with specific inorganic fillers termed "reinforcing" fillers, preferably of high dispersibility. These fillers, in particular white fillers such as precipitated silicas, are capable of competing with, and even of being better than, conventional carbon black from a reinforcing viewpoint, and which also offer these compositions lower hysteresis, which is especially synonymous with a reduction in the internal heating of the elastomeric articles during their use.

It is known from the skilled person that, in the elastomer compositions containing such reinforcing inorganic fillers, it is usually necessary to use an inorganic filler - elastomer coupling agent, also called binding agent, whose function is to ensure a sufficient connection, of chemical and/or physical nature, between the surface of the inorganic filler particles (for instance a precipitated silica) and the elastomer, while at the same time facilitating the dispersion of this inorganic filler in the elastomeric matrix.

Such a coupling agent, which is at least bifunctional, has for example the simplified general formula "N-V-M", wherein :
- N represents a functional group (function "N") capable of physically and/or chemically bonding to the inorganic filler, such a bond possibly being established, for example, between a silicon atom of the coupling agent and the surface hydroxyl (OH) groups of the inorganic filler (for example the surface silanols when it is silica) ;
- M represents a functional group (function "M") capable of physically and/or chemically bonding to the elastomer, for example via a suitable atom or group of atoms (for instance a sulphur atom) ;
- V represents a (divalent/hydrocarbon) group allowing "N" and "M" to be connected.

The coupling agents should in particular not be confused with simple agents for covering the inorganic filler, which, in a known manner, may comprise the function "N" that is active towards the inorganic filler, but which in any case lack the function "M" that is active towards the elastomer.

Coupling agents, especially silica - elastomer coupling agents, have been described in a large number of prior art documents, the most well known being (poly)sulphurated silanes, in particular (poly)sulphurated alkoxysilanes. Among these (poly)sulphurated silanes, mention should be made most particularly of bis-triethoxysilylpropyl tetrasulphide (abbreviated as TESPT), which is at the present time considered as being a product that provides, for silica charged vulcanizates, the best compromise in terms of scorching safety, ease of use and reinforcing power.

US4386185 and US4401535 disclose dihydrocarbyl mercaptohydroxycarbyl phosphonate compounds and their use as coupling agents for silica in rubber compositions.

The combined use of precipitated silica, especially with high dispersibility, and a polysulphurated silane (or functionalized organosilane compound) in a modified elastomer composition has allowed the development of "green tires" for passenger cars (light cars). This combination has led to a wear resistance comparable to the one of elastomer mixtures which are reinforced with carbon black, while significatively increasing the rolling resistance (hence a reduction of fuel consumption) and the wet traction (hence a reduction of the braking distance on wet roads).

Thus, it would be of interest to use also an inorganic filler like silica in tires for heavy vehicles (such as trucks), tires which are obtained from compositions with isoprene elastomer(s), mostly with natural rubber.

However, the same combination silica / polysulphurated silane applied to an isoprene elastomer like natural rubber has not led to a sufficient reinforcement level (which may be illustrated by a stress - uniaxial traction elongation curve) in comparison with the level obtained with carbon black as a filler, this reduced reinforcement leading to a bad wear resistance.

This combination is an alternative of the use of known coupling agents with known reinforcing inorganic fillers, and also provides said elastomer compositions with a very satisfying compromise of properties, such as rheological, mechanical and/or dynamical, in particular hysteretic, properties. Generally, this combination could lead to an improvement of the compromise hysteresis/reinforcement. Furthermore, the obtained elastomer compositions preferably have a good adherence to the reinforcing inorganic filler as well as to the substrates onto which they are then applied.

More precisely, the present invention provides filler-containing elastomer compositions preferably based on isoprene elastomer(s), e.g. based on natural rubber, which are especially suitable for tires of heavy vehicles, such as trucks. These elastomer compositions comprise an inorganic filler with a specific compound which acts as a coupling agent between the inorganic filler and the elastomer(s).

Thus, according to a first specific aspect, one subject-matter of the invention is the use, in an elastomer composition, of an inorganic filler with a compound having the following formula (I), said compound of formula (I) being optionally, in all or part, in a polymerized form : 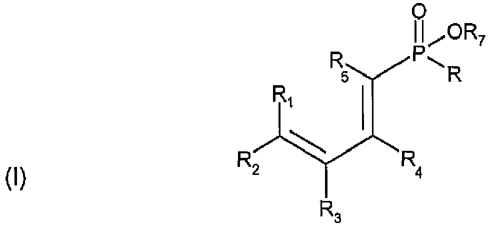 wherein:
* R is R₆ or OR₈,
* each of R₁, R₂, R₃, R₄, R₅, and R₆ is independently selected from: hydrogen, alkyl, aryl, alkaryl, aralkyl, cycloalkyl, heterocycloalkyl, and alkenyl groups, and
* each of R₇ and R₈ is independently selected from: hydrogen, alkyl, aryl, alkaryl, aralkyl, cycloalkyl, alkenyl groups, and metals selected from the group consisting of Na, Li, and Ca.

The elastomer composition preferably comprises at least one isoprene elastomer, for example a natural rubber.

The above compound of formula (I), which is optionally, in all or part, in a polymerized form, is generally used, inter alia, as a coupling agent between the inorganic filler and the elastomers (typically between the inorganic filler and the isoprene elastomers, and optionally between the inorganic filler and other elastomers present in the composition).

According to another specific aspect, the invention relates to the compositions implementing the specific combination used according to the invention, namely compositions comprising (i) an elastomer, preferably an isoprene elastomer, (ii) an inorganic filler and (iii) a compound having the following formula (I) above, said compound of formula (I) being optionally, in all or part, in a polymerized form.

The compound depicted by the formula (I) above is a conjugated diene compound. According to a specific embodiment, a mixture of different conjugated dienes matching formula (I) may be used. Optionally, one ore more compounds of formula (I) may be used together with other conjugated diene compound.

The compound(s) of formula (I) may be used, in all or part, in a polymerized form. According to the instant description, the expression "compound of formula (I) in a polymerized form" refers to a polymer obtainable by polymerisation of monomers including at least one monomer of formula (I) as defined above. This polymer may be either an homopolymer, or a copolymer (block or random polymer for example). In the specific case of a copolymer, it may be :
- a polymer obtainable by polymerisation of compounds of formula (I) of different nature (for example without any other monomers) ; or
- a polymer obtainable by polymerisation of one ore more compounds of formula (I) with other monomers that do not match formula (I), said other monomers being for example selected from:
   - conjugated diene compounds, such as, for instance, isoprene, butadiene and/or isobutylene ;
   - unsaturated compounds, especially ethylenically, allylically and/or vinylically unsaturated compounds, that may be for example aromatic vinyl compound, vinyl compound, vinyl nitrile, ally! compound, allyl ester, acrylic ester, and/or methacrylic ester.

Typically, a compound of formula (I) which is in a polymerized form is a polymer having a low polymerization index (a so-called "oligomer"), for example a polymer a polymerisation index below 20, more preferably below 10. The expression "polymerisation index" (also referred as "polymerisation degree") of a given polymer population herein refers to the mean number of monomer units contained in the polymers of the considered population. This "polymerisation index" may especially be established by using ¹H NMR spectroscopy.

For example, a compound of formula (I) in a polymerized form may be :
- a homopolymer of a monomer of formula (I), said homopolymer preferably having a polymerisation index below 10, more preferably below 5 ; or
- a copolymer formed by polymerisation of a mixture consisting of distinct monomers each matching the formula (I), said polymer preferably having a polymerisation index below 10, more preferably below 5.

The compounds of formula (I) used according to the instant invention may be used in the form of:
- a single compound of formula (I) ;
- an homopolymer of a single compound of formula (I), optionally in admixture with the same compound of formula (I) in a non polymerized form;
- a mixture of two or more compounds of formula (I) ;
- a mixture of at least one compound of formula (I) in a non polymerized form together with at least one compound of formula (I) in a polymerized form, the compound(s) in the polymerized form being identical or not to the compound(s) present in the non polymerized form.

According to a specific embodiment of the present invention, the compounds usefull as coupling agent which are used according to the invention are, or comprise, at least a compound of formula (I) in a polymerized form which is for example a polymer (oligomer) having the following formula (II): 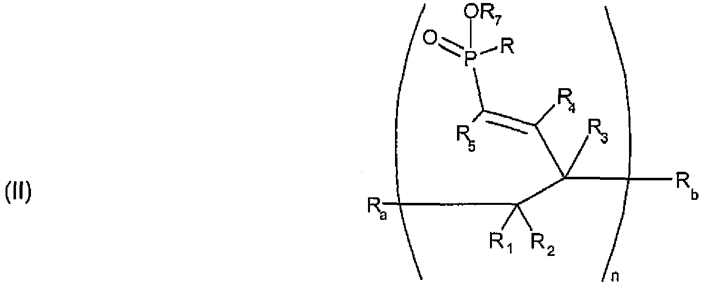 wherein:
- R, R₁, R₂, R₃, R₄, R₅ and R₇ are as defined above;
- n, which is the polymerisation index of the polymer is below 20, for instance below 10, e.g. from 1.2 to 7, especially from 1.5 to 6 ; and
- Rₐ and R_{b} are terminal groups, preferably chosen from H and alkyl groups.

In the polymer of formula (II), n may be for example from 2 to 5, especially from 2.5 to 4.5, e.g. from 3.8 to 4.

The compounds useful as coupling agent which are used according to the invention may contain a single polymer of formula (II) or a mixture of different polymers matching formula (II), optionally with one or more compound(s) of formula (I) in a non polymerized form.

According to the instant description, the terms "alkyl" and "alkenyl" depict groups comprising preferably from 1 to 24 carbon atoms, in particular from 1 to 18 carbon atoms, e.g. from 1 to 10 carbon atoms.

The "aryl" groups preferably comprise from 6 to 24 carbon atoms, in particular from 6 to 18 carbon atoms, e.g. from 6 to 10 carbon atoms.

The "alkaryl" and "aralkyle" groups preferably comprise from 7 to 24 carbon atoms, in particular from 7 to 18 carbon atoms, e.g. from 7 to 10 carbon atoms.

The cycloalkyl and heterocycloalkyl groups preferably comprise from 3 to 24 carbon atoms, in particular from 3 to 18 carbon atoms.

According to a specific embodiment, two of R₁, R₂, R₃, R₄, R₅, R₆, and R₇ may form together a cycloalkyl, or heterocycloalkyl group, which is preferably selected from 3 to 8 membered rings.

The compounds of formula (I) or (II) may contain one or more chiral centers and/or double bonds and therefore may exist as stereoisomers, such as Z- and E- or cis- and trans- isomers from cyclic structures or double bonds (i.e., geometric isomers), rotamers, enantiomers or diastereomers. Accordingly, when stereochemistry at chiral centers is not specified, the chemical structures depicted herein encompass all possible configurations at those chiral centers including the stereoisomerically pure form (e.g., geometrically pure, enantiomerically pure or diastereomerically pure) and enantiomeric and stereoisomeric mixtures, with the exception that when only one enantiomer is specified, the structure includes the other enantiomer as well. For example, in the event that a compound of formula I disclosed in the present invention is Z-form or trans-form for the double bond close to P, one skilled in this art should understand that the E-form or cis-form of the compound is also disclosed. Enantiomeric and stereoisomeric mixtures can be resolved into their component enantiomers or stereoisomers using separation techniques or chiral synthesis techniques well known to those skilled in this art.

According to an embodiment of the present invention, in formula (I) or (II) as defined above, R₁ is H.

According to an embodiment of the present invention, in formula (I) or (II) as defined above, R₂ is H. According to a specific embodiment both R₁ and R₂ are H.

According to an embodiment of the present invention, in formula (I) or (II) as defined above, R₄ is H. Especially in that case, R₁ and/or R₂ may be H.

According to a specific embodiment of the present invention, in formula (I) or (II) as defined above, R₁, R₂ and R₄ are H.

In formula (I) or (II) as defined above, R₃ may be an alkyl group, for example a methyl.

In formula (I) or (II) as defined above, R₅ may be an alkyl group, for example a methyl.

According to a particular embodiment, in formula (I) or (II), R₃ and R₅ are both methyl.

According to a particular embodiment, in formula (I) or (II), R₁, R₂ and R₄ represent hydrogen, and R₃ and R₅ represent methyl.

According to a first variant of the invention, R is a R₆ group. According to this variant, R=R₆ is preferably H. In that case, compounds or formula (I) or (II) are carrying phosphinate groups.

According to this first variant, the compounds usefull as coupling agent which are used according to the invention may especially comprise compounds having the formula III, this compound being optionally, in all or part, in a polymerized form: 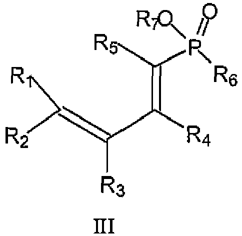 wherein, R₁, R₂, R₃, R₄, R₅ and R₆ represent, independently, hydrogen, alkyl, aryl, alkaryl, aralkyl, cycloalkyl, heterocycloalkyl, or alkenyl groups; preferably, the said alkyl, alkenyl comprise from 1∼18 carbon atoms, said aryl comprises from 6∼18 carbon atoms, said alkaryl, aralkyl comprise from 7∼18 carbon atoms, and said cycloalkyl, heterocycloalkyl comprise from 3∼18 carbon atoms.

Preferably, R₁ and/or R₂ represent hydrogen.

Preferably, R₁, R₂ and R₄ represent hydrogen; or R₃ and R₅ represent methyl; more preferably, R₁, R₂ and R₄ represent hydrogen, R₃ and R₅ represents methyl.

R₇ represents hydrogen, alkyl, aryl, alkaryl, aralkyl, cycloalkyl, alkenyl groups, or metals selected from the group consisting of Na, Li, Ca, preferably, the said alkyl, alkenyl comprise from 1∼18 carbon atoms, said aryl comprises from 6∼18 carbon atoms, said alkaryl, aralkyl comprise from 7∼18 carbon atoms, and said cycloalkyl, heterocycloalkyl comprise from 3-18 carbon atoms.

In one embodiment, any two of R₁, R₂, R₃, R₄, R₅, R₆, and R₇ are together formed into a cycloalkyl, or heterocycloalkyl group, which is preferably selected from 3 ∼ 8 membered rings.

A specific phosphinate compound of formula (III) useful according to the instant invention is the 4-methyl-2,4-pentadiene-2-phosphinic acid (PiDM) having the following formula :

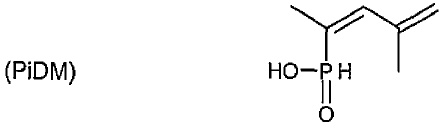

The compounds of formula (III) above (for example PiDM) may especially be prepared from α,β- or β,γ-unsaturated ketones or aldehydes, for example by a method comprising:
reacting an α,β- or β,γ-unsaturated ketone or aldehyde having the formula (I-1) or (11-1), 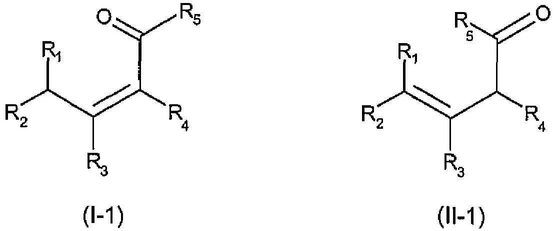
with a phosphinic acid or its derivatives having the formula 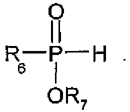
to obtain a compound having the formula (III) as defined above.

The above process allows to change the selectivity of the reaction of phosphinate compounds bearing at least one P-H bond to obtain selectively 1,3-diene compounds when starting from α,β or β,γ-unsaturated carbonyl compounds.

Without wishing to be bound by any existing theory, the above preparation method is valid whether starting from α,β-unsaturated carbonyl compounds or β,γ-unsaturated carbonyl compounds and both species will lead to the formation of the same diene.

According to this method, the compound (I-1) or (II-1) is preferably added in the molar ratio of from 0.5:1 to 2:1 relative to said phosphinic acid or its derivatives; or preferably from 1:1 to 1.5:1 relative to said phosphinic acid or its derivatives. Usually, the reaction is carried out in organic solvents such as solvent(s) selected from one or more of the group consisting of toluene, cyclohexane, and butyl ether. The reaction time remains generally from 4 to 24 hours, for example 4-8 hours. The reaction temperature remains from 0°C to 150°C, or preferably from 85°C to 125°C.

Preferably, the reaction is carried out under inert gas protection. Said inert gas may be selected from, for example, one or more of the group consisting of nitrogen, argon, and carbon dioxide.

For example, mesityl oxide, is reacted with hypophosphorous acid in its concentrated form to afford 4-methylpenta-2,4-diene-2-phosphinic acid. The same reaction could be carried out using 50% hypophosphorous acid using toluene as azeotropic solvent to remove water during the reaction. The target monomer can be easily isolated and purified by simple extractions and washes to obtain up to 97% pure product.

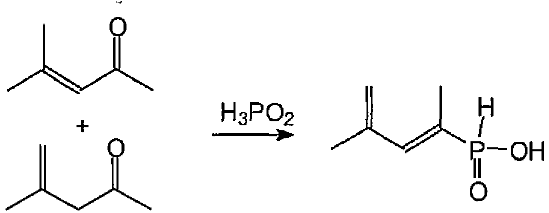

The process described above allows the formation of a mixture of phosphinate and phosphonate compounds that can be directly polymerized to obtain polymers containing both phosphinate and phosphonate groups in which both functionalities are well known to provide some useful properties.

The unsaturated ketones and aldehydes suitable for the present invention can be obtained from aldol condensations of ketones and aldehyde.

For example, dimerization of methyl isobutyl ketone (MIBK) as taught by US 4,170,609.

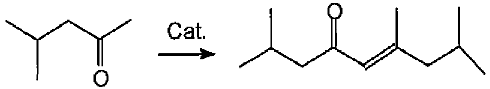

In a similar manner, aldol condensation of pinacolone will yield a highly branched unsaturated ketone:

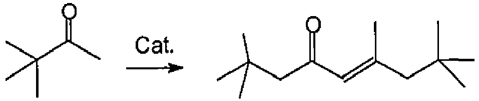

Some commercially available unsaturated ketones and aldehydes may also be used. They are important industrial chemicals used as solvents, for example, mesityl oxide, precursor to other commodity and specialty chemicals, for example, isophorone and monomer for polymeric materials, for example, methyl vinyl ketone (MVK). 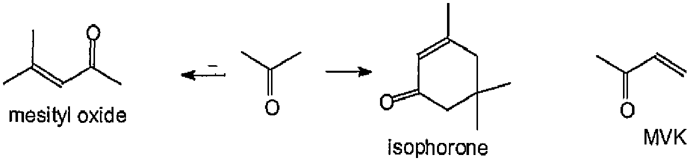 3-Methylcrotonaldehyde is a precursor for Vitamine A. Industrially, it is produced from isobutene and formaldehyde:

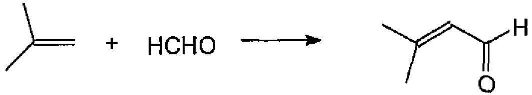

An attractive one may be crotonaldehyde. It is a biogenic compound, used for florvoring. It can be produced from renewable resources, bioethanol: 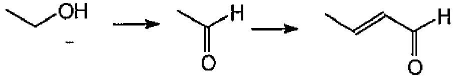 2-Ethyl acrolein, and its isomer of tiglic aldehydes are intermediate for flavor agents (US4605779):

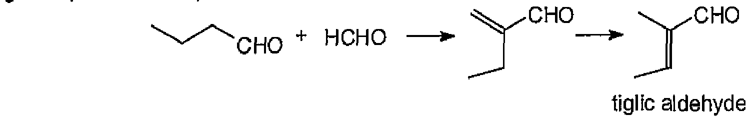

Natural unsaturated ketones and aldehydes could also be used in the preparation, for example, piperitone, carvone, umbellulone, menthene-2-one, menthene-3-one, verbenone and myrtenal.

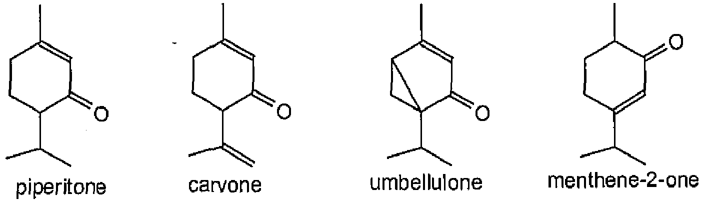

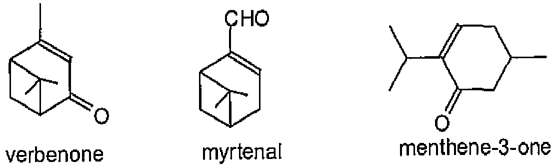

According to a second variant of the invention, R is a OR₈ group. According to this variant, R₈ is preferably H. For example, R₇ and R₈ are H. In another embodiment, R₇ and R₈ may form together a cycloalkyl, or heterocycloalkyl group, which is preferably selected from 5, 6, 7 and 8 membered rings. In that case, compounds or formula (I) or (II) are carrying phosphonate groups.

According to this second variant, the compounds useful as coupling agent which are used according to the invention may especially comprise compounds having the formula (I) as defined above, in all or part, in a polymerized form, and wherein:
▪ R₁, R₂, R₃, R₄, and R₅ represent, independently, hydrogen, alkyl, aryl, alkaryl, aralkyl, cycloalkyl, heterocycloalkyl, or alkenyl groups; preferably, the said alkyl and alkenyl comprise from 1∼24 carbon atoms, said aryl comprises from 6∼24 carbon atoms, said alkaryl, aralkyl comprise from 7∼24 carbon atoms, and said cycloalkyl, heterocycloalkyl comprise from 3∼24 carbon atoms; more preferably, the said alkyl and alkenyl comprise from 1∼18 carbon atoms, said aryl comprises from 6∼18 carbon atoms, said alkaryl, aralkyl comprise from 7∼18 carbon atoms, and said cycloalkyl, heterocycloalkyl comprise from 3∼18 carbon atoms. Preferably, according to this embodiment, R₁ and/or R₂ represent hydrogen. Especially, R₁, R₂ and R₄ may represent hydrogen; or preferably, R₃ and R₅ represent methyl. More preferably, R₁, R₂, and R₄ represent hydrogen and R₃, R₅ represent methyl. Any two of R₁, R₂, R₃, R₄ and R₅ may form together a cycloalkyl, or heterocycloalkyl group, which is preferably selected from 5, 6, 7 and 8 membered rings
▪ R is OR₈, and R₇ and R₈ represent, independently, hydrogen, alkyl, aryl, alkaryl, aralkyl, cycloalkyl, alkenyl groups, or metals selected from the group consisting of Na, Li, Ca. Preferably, the said alkyl and alkenyl comprise from 1∼24 carbon atoms, said aryl comprises from 6∼24 carbon atoms, said alkaryl, aralkyl comprise from 7∼24 carbon atoms, and said cycloalkyl, heterocycloalkyl comprise from 3∼24 carbon atoms; more preferably, the said alkyl, alkenyl comprise from 1∼18 carbon atoms, said aryl comprises from 6∼18 carbon atoms, said alkaryl, aralkyl comprise from 7∼18 carbon atoms, and said cycloalkyl, heterocycloalkyl comprise from 3∼18 carbon atoms. Preferably, according to this specific embodiment, R₇ and R₈ represent hydrogen. In another embodiment, R₇ and R₈ form together a cycloalkyl, or heterocycloalkyl group, which is preferably selected from 5, 6, 7 and 8 membered rings.

A specific phosphonate compound according to this variant is the 4-methyl-2,4-pentadiene-2-phosphonic acid (PoDM), having the following formula:

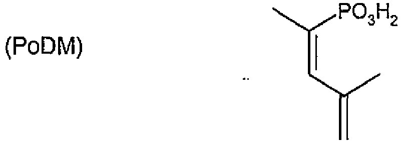

Other interesting compounds are homopolymers of PoDM, especially those matching the following formula : 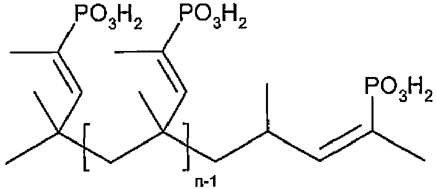 wherein n is preferably lower than 19, especially lower than 9, for example from 0.2 to 6, e.g. from 0.5 to 5 (typically from 1 to 4, for instance from 1.5 to 3.5, e.g. equal to 2.9).

The phosphonate compounds according to the second variant may e.g. be prepared from α,β- or β,γ-unsaturated ketones or aldehydes, by a method which comprises reacting an α,β- or β,γ-unsaturated ketone or aldehyde having the formula (I-1) or (II-1) as defined above,
with a phosphorous acid or its derivatives having the structure 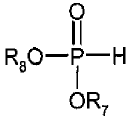 R₇ and R₈ being as defined above in formula (I).

According to the above method, the compound (I-1) or (II-1) is preferably added in the molar ratio of from 1:1 to 1.5:1 relative to said phosphorous acid or its derivatives; or preferably from 1:1 to 1.2:1 relative to said phosphorous acid or its derivatives. The reaction time remains typically from 4 to 24 hours, or preferably 4-8 hours. The reaction temperature remains from 0°C to 100°C, or preferably from 20°C to 60°C.

The above reaction may be optionally carried out under protection of inert gas protection. Said inert gas may be selected from, for example, one or more of the group consisting of nitrogen, argon, and carbon dioxide.

Without wishing to be bound by any existing theory, the above preparation method of the present invention is valid whether starting from α,β-unsaturated carbonyl compounds or α,γ-unsaturated carbonyl compounds and both species will lead to the formation of the same diene.

The unsaturated ketones and aldehydes used in the process can be obtained from aldol condensations of carbonyl compounds.

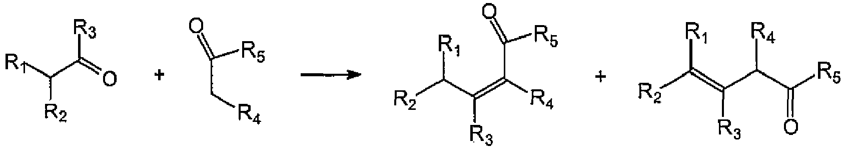

The inorganic filler which is used in the present invention is generally a reinforcing inorganic filler.

Silica, alumina, carbon black totally or partially covered with silica and/or alumina, or a mixture of these species, could be used in the present invention as reinforcing inorganic filler.

However, according to a preferred embodiment of the present invention, silica, more preferably precipitated silica, is used as reinforcing inorganic filler.

According to a specific embodiment, said precipitated silica is highly dispersible. So, in particular, it has a high capacity for disintegration and dispersion in a polymer matrix, which may be observed by electron microscopy or optical microscopy, on thin slices.

Generally, the precipitated silica used in the present invention has a CTAB specific surface area of from 70 to 300 m²/g.

This CTAB specific area could be from 70 to 100 m²/g, for example from 75 to 95 m²/g.

However, most preferably, the CTAB specific surface area of said precipitated silica is from 100 to 300 m²/g, in particular from 100 to 240 m²/g, such as from 140 to 200 m²/g.

Generally, the precipitated silica used in the present invention has a BET specific surface area of from 70 to 300 m²/g.

This BET specific surface area could be from 70 to 100 m²/g, for example from 75 to 95 m²/g.

However, most preferably, the BET specific surface area of said precipitated silica is from 100 to 300 m²/g, in particular from 100 to 240 m²/g, such as from 140 to 200 m²/g.

The CTAB specific surface area is determined according to the method NF T 45007 (November 1987). The BET specific surface area is determined according to the Brunauer-Emmett-Teller method described in "The Journal of the American Chemical Society", Vol. 60, page 309 (1938) corresponding to the NF T 45007 (November 1987).

The precipitated silica may for example have:
- a CTAB specific surface of from 140 to 170 m²/g, and a BET specific surface of from 140 to 180 m²/g, or
- a CTAB specific surface of from 70 to 140 m²/g, in particular of from 70 to 100 m²/g, and a BET specific surface of from 70 to 140 m²/g, in particular of from 70 to 100 m²/g, or
- a CTAB specific surface of from 170 to 300 m²/g, in particular of from 180 to 220 m²/g, and a BET specific surface of from 180 to 300 m²/g, in particular from 185 to 230 m²/g.

The capacity for dispersion (and disintegration) of the precipitated silica is assessed by a particle size measurement (using laser scattering), performed on a silica suspension previously disintegrated by ultrasonic treatment; the disintegratability of the silica is thus measured (rupture of objects from 0.1 to a few tens of microns). The disintegration under ultrasound is performed with the aid of a VIBRACELL BIOBLOCK (750 W) sonic transducer equipped with a probe 19 mm in diameter. The particle size measurement is performed by laser scattering on a SYMPATEC particle size analyzer, by implementing the Fraunhofer theory.

2 grams of silica are measured out into a specimen tube (height : 6 cm and diameter: 4 cm) and are made up to 50 grams by adding demineralized water; an aqueous suspension containing 4 % of silica is thus produced, which is homogenized for 2 minutes by magnetic stirring. The disintegration under ultrasound is next performed as follows : the probe is immersed to a depth of 4 cm, it is then put into operation for 5 minutes and 30 seconds at 80 % of its nominal power (amplitude). The particle size measurement is then carried out after a known volume V (expressed in ml) of the homogenized suspension has been introduced into the cell of the particle size analyzer for having an optical density of about 20.

The value of the median diameter Ø₅₀ which is obtained is proportionally smaller the higher the disintegratability of the silica.

The "ultrasonic disintegration factor (F_{D})" is calculated as follows:
F_{D} = 10 x V / optical density of the suspension detected by the particle size analyzer (this optical density is of the order of 20).

This F_{D} ratio is an indication of the content of particles smaller than 0.1 µm, which are not detected by the particle size analyzer. This ratio is proportionally higher the higher the the capacity for disintegration of the silica.

The precipitated silica used in the present invention may have a median diameter (Ø₅₀), after disintegration with ultrasound, smaller than 5 µm, preferably smaller than 4.5 µm, more preferably less than 4 *µ*m, most preferably less than 3.5 *µ*m, or even smaller than 3 µm.

The precipitated silica used in the present invention may have an ultrasonic disintegration factor F_{D} higher than 4.5 ml, in particular higher than 5.5 ml, preferably higher than 9 ml, advantageously higher than 9 ml, and for example higher than 10 ml, and even higher than 12.5 ml.

Besides, the pH of the precipitated silica used in the present invention is generally from 6.3 and 8.0, for example between 6.3 and 7.6.

This pH is the pH as measured according to ISO standard 787/9 (pH of a suspension at a concentration of 5% in water):
Equipment:
   - calibrated pH meter (reading accuracy 1/100e)
   - combined glass electrode
   - 200 ml beaker
   - 100 ml glass cylinder
   - precision balance (to 0.01 g)
Protocol:
   5 g of silica are weighed to 0.01 g in the beaker. 95 ml of water (measured with the glass cylinder) are then added to the silica powder. The suspension thus obtained is strongly agitated (magnetic stirring) for 10 minutes. The pH is then measured.

The precipitated silica to be used in the present invention may be in any physical state, i.e. said precipitated silica may be in the form of micropearls (substantially spherical beads), of powder, or of granules.

Said precipitated silica may be in the form of substantially spherical beads, preferably having a mean size of at least 80 µm. According to specific embodiments, this mean size is at least 100 µm, for example at least 150 µm ; it is generally at most 300 µm and preferably lies between 100 and 270 µm. This mean size is determined according to NF standard X 11507 (December 1970) by dry screening and determination of the diameter corresponding to a cumulative oversize of 50 %.

The precipitated silica may be in the form of powder having a mean size of at least 3 *µ*m, in particular of at least 10 µm, preferably of at least 15 *µ*m ; the latter is, for example, between 15 and 60 µm.

The precipitated silica may also be in the form of granules (generally having a parallelepipedic form), the dimensions of which are of at least 1 mm, in particular between 1 and 10 mm, along the axis of their largest dimension (length).

The precipitated silica as defined above may be prepared for example by a precipitation reaction of a silicate, in particular alkaline metal silicate (such as sodium silicate), with an acidifying agent (such as sulphuric acid). A suspension of precipitated silica is thus obtained and then the obtained precipitated silica is separated, in particular by filtration (with the production of a filtration cake). There is then a drying step, generally by spray drying. The preparation method of the precipitation silica may be any method, such as the addition of an acidifying agent in a silicate reaction mixture or the full or partial simultaneous addition of the acidifying agent and the silicate in a reaction mixture comprising water and silicate.

As examples of precipitated silicas which could be used in the present invention, mention may be made of the commercial silicas, in particular a highly dispersible silica such as Z1165MP or Z1115 MP.

The precipitated silica used in the invention may be prepared for example by implementing the methods described in EP 0 520 862, EP 0 670 813 and EP 0 670 814 patents.

According to a particular embodiment, the precipitated silica used in the present invention comprises aluminium, and preferably has an aluminium content greater than 0.5 % by weight.

Said aluminium-containing precipitated silica may comprise at most 7.0 % by weight, preferably at most 5.0 % by weight, in particular at most 3.5 % by weight, and for example at most 3 % by weight.

Preferably, its aluminium content is from 0.75 to 4.0 % by weight, more preferably from 0.8 to 3.5 % by weight, in particular from 0.9 by 3.2 % by weight, notably from 0.9 to 2.5 % by weight or from 1.0 to 3.1 % by weight. It is for example from 1.0 to 3.0 % by weight, or from 1.0 to 2.0 % by weight.

The quantity of aluminium may be measured by any suitable method, for example ICP-AES ("Inductively Coupled Plasma - Atomic Emission Spectroscopy") after the addition of the silica in water in the presence of hydrofluoric acid.

Generally, aluminium is to be found at the surface of the precipitated silica.

Even if aluminium is either in the tetrahedron, octahedron or pentahedron form, in particular in the tetrahedron and octahedron form, in such precipitated silica used in the present invention, it is mostly in the tetrahedron form (more than 50 %, in particular at least 90 %, and at least 95 %, of aluminium species are then in the tetrahedron form). The bonds are then essentially of SiOAl type.

The aluminium-containing precipitated silica may exhibit the different parameters mentioned above for the precipitated silica.

Among others, and preferably, this aluminium-containing precipitated silicas is highly dispersible.

The DOP oil uptake of the aluminium-containing precipitated silica may be less than 300 ml/100g, and is for instance ranging from 200 to 295 ml/100g. The DOP value may be determined according to the ISO 787/5 norm with the use of dioctylphtalate.

One of the parameters of the aluminium-containing precipitated silica which could be used in the invention can reside in the distribution of its pore volume, especially in the distribution of pore volume that is generated by the pores with diameters less than or equal to 400 Å. This volume is the useful pore volume of fillers carried out for reinforcing elastomers.

According to an embodiment of the invention, this aluminium-containing precipitated silica has a pore distribution such that the pore volume generated by the pores with diameters between 175 and 275 Å (V2) is less than 50 % of the pore volume generated by pores with diameters less than or equal to 400 Å (V1).

According to another embodiment of the invention, the aluminium-containing precipitated silica has a pore distribution such that the pore volume generated by the pores with diameters between 175 and 275 Å (V2) represents at least 50 % (for example between 50 and 60 %) of the pore volume generated by pores with diameters less than or equal to 400 Å (V1).

The pore volumes and pore diameters are measured by mercury (Hg) porosimetry, using a MICROMERITICS Autopore 9520 porosimeter, and are calculated by the WASHBURN relationship with a contact angle theta equal to 130° and a surface tension gamma equal to 484 Dynes/cm (DIN 66133 standard).

According to a particular embodiment of the invention, the aluminium-containing precipitated silica used in the present invention has an aluminium content greater than 0.5 % by weight and may have the additional following characteristics:
- a CTAB specific surface ranging from 140 to 200 m²/g,
- a BET specific surface ranging from 140 to 200 m²/g,
- possibly, a DOP oil uptake less than 300 ml/100g,
- a median diameter Ø₅₀, after ultra-sound disintegration, of less than 3 *µ*m, and
- an ultrasonic disintegration factor F_{D} greater than 10 ml.

In this particular embodiment of the invention, such aluminium-containing precipitated silica may have for example a pore distribution such that the pore volume generated by the pores with diameters between 175 and 275 Å (V2) represents at least 50 %, for example between 50 and 60 %, of the pore volume generated by pores with diameters less than or equal to 400 Å (V1).

According to another particular embodiment, the aluminium-containing precipitated silica used in the present invention has an aluminium content greater than 0.5 % by weight and may have the the additional following characteristics :
- a CTAB specific surface comprised from 140 to 200 m²/g,
- eventually, a DOP oil uptake less than 300 ml/100g,
- a pore distribution such that the pore volume generated by the pores with diameters between 175 and 275 Å (V2) represents less than 50 % of the pore volume generated by pores with diameters less than or equal to 400 Å (V1), and
- a median diameter Ø₅₀, after ultra-sound disintegration, of less than 5 *µ*m.

According to another particular embodiment, the aluminium-containing precipitated silica used in the present invention has an aluminium content greater than 0.5 % by weight and may have the the additional following characteristics :
- a CTAB specific surface comprised from 140 to 200 m²/g,
- eventually, a DOP oil uptake less than 300 ml/100g,
- a pore distribution such that the pore volume generated by the pores with diameters between 175 and 275 Å (V2) represents at least 50 %, for example between 50 and 60 %, of the pore volume generated by pores with diameters less than or equal to 400 Å (V1), and
- a median diameter Ø₅₀, after ultra-sound disintegration, of less than 5 *µ*m.

The aluminium-containing precipitated silica may be prepared for example by implementing a process as described in EP 0 762 992, EP 0 762 993, EP 0 983 966 and EP 1 355 856.

Preferably, the aluminium-containing precipitated silica which could be used in the present invention may be prepared by a process including the precipitation reaction of a silicate with an acidifying agent, whereby a suspension of precipitated silica is obtained, followed by the separation and the drying of this suspension, in which :
- the precipitation reaction is carried out as follows :
   (i) an initial base stock comprising a silicate and an electrolyte is formed, the silicate concentration (expressed as SiO₂) in said initial base stock being lower than 100 g/l and the electrolyte concentration in said initial base stock being lower than 17 g/l,
   (ii) the acidifying agent is added to said base stock until a pH value of the reaction mixture of at least approximately 7 is obtained,
   (iii) acidifying agent and a silicate are added simultaneously to the reaction mixture,
- a suspension which has a solids content of not more than 24 % by weight is dried,
said process comprising one of the three following (a), (b) or (c) operations :
(a) at least one aluminium compound A is added to the reaction mixture after stage (iii), and, then or simultaneously, a basic agent is added,
(b) after stage (iii), or instead of stage (iii), a silicate and an aluminium compound A are simultaneously added to the reaction mixture,
(c) stage (iii) is carried out by simultaneously adding the acidifying agent, a silicate and at least one aluminium compound B to the reaction mixture.

It should be noted, in general, that the process concerned is a process for the synthesis of precipitated silica, that is to say that an acidifying agent is reacted with a silicate in very special conditions.

The choice of the acidifying agent and of the silicate is made in a manner which is well known per se.

The acidifying agent generally employed is a strong inorganic acid such as sulfuric acid, nitric acid or hydrochloric acid, or an organic acid such as acetic acid, formic acid or carbonic acid.

The acidifying agent used in this process may be dilute or concentrated ; its normality may be from 0.4 to 36 N, for example from 0.6 to 1.5 N.

In particular, in the case where the acidifying agent is sulfuric acid, its concentration may be between 40 and 180 g/l, for example between 60 and 130 g/l.

It is possible, furthermore, to employ as a silicate any common form of silicates such as metasilicates, disilicates and advantageously an alkali metal silicate, especially sodium or potassium silicate.

The silicate may exhibit a concentration (expressed as SiO₂) of between 40 and 330 g/l, for example between 60 and 300 g/l.

In general, sulfuric acid is employed as the acidifying agent, and sodium silicate as the silicate.

In the case where sodium silicate is employed, the latter generally exhibits an SiO₂/Na₂O weight ratio of from 2.5 to 4, for example from 3.1 to 3.8.

The reaction of the silicate with the acidifying agent is done in a specific manner according to the following stages.

First of all a base stock is formed which includes silicate and an electrolyte (stage (i)). The quantity of silicate present in the initial base stock advantageously represents only a part of the total quantity of silicate introduced into the reaction.

The term electrolyte is understood here in its normal accepted meaning, that is to say that it denotes any ionic or molecular substance which, when in solution, decomposes or dissociates to form ions or charged particles, An electrolyte which may be mentioned is a salt from the group of the alkali and alkaline-earth metal salts, especially the salt of the metal of the starting silicate and of the acidifying agent, for example sodium sulfate in the case of the reaction of a sodium silicate with sulfuric acid.

The electrolyte concentration in the initial base stock is (higher than 0 g/l and) lower than 17 g/l, preferably lower than 14 g/l.

The silicate concentration (expressed in SiO₂) in the initial base stock is (higher than 0 g/l and) lower than 100 g/l. Preferably, this concentration is lower than 90 g/l, especially lower than 85 g/l.

The second stage consists in adding the acidifying agent to the base stock of composition described above (stage (ii)).

This addition, which entails a corresponding lowering in the pH of the reaction mixture, takes place until a pH value of at least approximately 7, generally between 7 and 8, is reached.

Once the desired pH value is reached, a simultaneous addition (stage (iii)) of acidifying agent and of silicate is then carried out.

This simultaneous addition is preferably carried out so that the pH value is continuously equal (to within ± 0.1) to that reached at the end of stage (ii).

This process comprises one of the three operations (a), (b) or (c) as mentioned previously, that is to say :
(a) at least one aluminium compound A and, then or simultaneously, a basic agent are added, after stage (iii), to the reaction mixture, the separation used in the process preferably comprising a filtration and a disintegration of the cake originating from this filtration, the said disintegration being then preferably performed in the presence of at least one aluminium compound B,
(b) a silicate and at least one aluminium compound A are added simultaneously to the reaction mixture, after or instead of stage (iii), the separation used in the process comprising preferably a filtration and a disintegration of the cake originating from this filtration, the disintegration being then preferably performed in the presence of at least one aluminium compound B, or
(c) during stage (iii), the acidifying agent, a silicate and at least one aluminium compound B are added simultaneously to the reaction mixture, the separation used in the process comprising preferably a filtration and a disintegration of the cake originating from this filtration, the disintegration being then possibly performed in the presence of at least one aluminium compound B.

In a first alternative form of this process of preparation (that is to say when the latter includes the operation (a)), after having carried out the precipitation according to the stages (i), (ii) and (iii) described above, the following stages are advantageously performed :
(iv) at least one aluminium compound A is added to the reaction mixture (that is to say to the reaction suspension or slurry obtained),
(v) a basic agent is added to the reaction mixture, preferably until a pH value of the reaction mixture of between 6.5 and 10, in particular between 7.2 and 8.6, is obtained,
(vi) acidifying agent is added to the reaction mixture, preferably until a pH value of the reaction mixture of between 3 and 5, in particular between 3.4 and 4.5, is obtained.

The stage (v) may be implemented simultaneously with or, preferably, after stage (iv).

After the simultaneous addition of stage (iii) a maturing of the reaction mixture may be performed, it being possible for this maturing to last, for example, from 1 to 60 minutes, in particular from 3 to 30 minutes.

In this first alternative form it may be desirable, between stage (iii) and stage (iv), and especially before the said optional maturing, to add an additional quantity of acidifying agent to the reaction mixture. This addition is generally done until a pH value of the reaction mixture of between 3 and 6.5, in particular between 4 and 6, is obtained.

The acidifying agent employed during this addition is generally identical with that employed during stages (ii), (iii) and (vi) of the first alternative form of the process of preparation.

A maturing of the reaction mixture is usually performed between stage (v) and (vi), for example for 2 to 60 minutes, in particular for 5 to 45 minutes.

Similarly, a maturing of the reaction mixture is in most cases performed after stage (vi), for example for 2 to 60 minutes, in particular for 5 to 45 minutes.

The basic agent employed during stage (iv) may be a solution of aqueous ammonia or, preferably, a solution of sodium hydroxide (or soda).

In a second alternative form of the process of preparation (that is to say when the latter includes the operation (b)), a stage (iv) is performed after the stages (i), (ii) and (iii) described previously or instead of stage (iii) described previously, this stage (iv) consisting in simultaneously adding a silicate and at least one aluminium compound A to the reaction mixture.

Only when the aluminium compound A is sufficiently acid (for example when this compound A is an aluminium sulphate), it is indeed possible (but not compulsory) to replace stage (iii) with stage (iv), which means that stage (iii) and stage (iv) form a single stage, the aluminium compound A acting then as the acidifying agent.

The simultaneous addition of stage (iv) is generally carried out so that the pH value is continuously equal (to within ± 0.1) to that reached at the end of stage (iii) or stage (ii).

After the simultaneous addition of stage (iv) it may then be possible to perform a maturing of the reaction mixture, it being possible for this maturing to last, for example, from 2 to 60 minutes, in particular from 5 to 30 minutes.

In this second alternative form it may be desirable, after stage (iv), and in particular after the said optional maturing, to add an additional quantity of acidifying agent to the reaction mixture. This addition is generally done until a pH value of the reaction mixture of between 3 and 6.5, in particular between 4 and 6, is obtained.

The acidifying agent employed during this addition is generally identical with that employed during stage (ii) of second alternative form of the process of preparation.

A maturing of the reaction mixture is usually performed after this addition of acidifying agent, for example for 1 to 60 minutes, in particular for 3 to 30 minutes.

The aluminium compound A employed in the process of preparation (especially for the two first alternative forms) is generally an organic or inorganic aluminium salt.

By way of examples of an organic salt there may be mentioned especially the salts of carboxylic or polycarboxylic acids, like the salts of acetic, citric, tartaric or oxalic acid.

By way of examples of an inorganic salt there may be mentioned especially halides and oxyhalides (like chlorides and oxychlorides), nitrates, phosphates, sulphates and oxysulphates.

In practice, the aluminium compound A may be employed in the form of a solution, generally aqueous.

An aluminium sulphate is preferably employed as aluminium compound A.

In a third alternative form of the process of preparation (that is to say when the latter includes the operation (c)), a stage (iii) is performed after the stages (i) and (ii) described previously, which consists in simultaneously adding the acidifying agent, a silicate and at least one aluminium compound B are added to the reaction mixture.

This simultaneous addition is generally carried out so that the pH value is continuously equal (to within ± 0.1) to that reached at the end of stage (ii).

In this third alternative form it may be desirable, after stage (iii), to add an additional quantity of acidifying agent to the reaction mixture. This addition is generally done until a pH value of the reaction mixture of between 3 and 6.9, in particular between 4 and 6.6, is obtained.

The acidifying agent employed during this addition is generally identical with that employed during stages (ii) and (iii).

A maturing of the reaction mixture is usually performed after this addition of acidifying agent, for example for 1 to 60 minutes, in particular for 3 to 30 minutes.

The aluminium compound B used in the third alternative form is generally an alkali metal, especially potassium or, preferably, sodium, aluminate.

The temperature of the reaction mixture is generally between 70 and 98°C.

According to an embodiment, the reaction is performed at a constant temperature of between 75 and 96°C.

According to another embodiment (preferred), the temperature at the end of the reaction is higher than the temperature at the beginning of the reaction: the temperature at the beginning of the reaction is thus maintained preferably between 70°C and 96°C, and the temperature is then raised over a few minutes, preferably up to a value of between 80°C and 98°C, at which value it is maintained until the end of the reaction ; the operations (a) and (b) are thus usually performed at this constant temperature.

At the end of the stages which have just been described, a silica slurry is obtained which is then separated (liquid-solid separation).

Generally, this separation comprises a filtration (followed by washing if necessary) and a disintegration, said disintegration being preferably performed in the presence of at least one aluminium compound B (preferably in the two first alternative forms as mentioned above, possibly for the third alternative form), and, possibly, in the presence of an acidifying agent such as described previously (in this case, the aluminium compound B and the acidifying agent are added simultaneously).

The disintegration operation, which may be carried out, for example, by passing the filter cake through a mill of the colloid or bead type, makes it possible in particular to lower the viscosity of the suspension to be subsequently dried.

The aluminium compound B is usually different from the aluminium compound A and consists usually in an alkali metal, especially potassium, or very preferably sodium, aluminate.

The quantities of the aluminium compounds A and if appropriate B employed in this process of preparation are preferably such that the aluminium-containing precipitated silica thus prepared contains at least 0.5 % by weight of aluminium, and in particular a more preferred aluminium content as mentioned above.

The separation used in the process of preparation according to the invention usually includes a filtration (including a washing if necessary) performed by means of any suitable method, for example by means of a belt filter, a rotary vacuum filter or, preferably, a filter press.

The suspension of precipitated silica thus recovered (filter cake) is then dried.

In this process of preparation, this suspension must exhibit, immediately before its drying, a solids content of not more than 24 % by weight, preferably not more than 22 % by weight.

This drying may be done according to any method that is known per se.

The drying is preferably done by atomization, Any suitable type of atomizer may be employed for this purpose, especially a turbine, nozzle, liquid-pressure or two-fluid atomizer. Generally, when the filtration is carried out with a filter press, the drying is done using a nozzle atomizer, and, when the filtration is carried out with a vacuum filter, the drying is done using a turbine atomizer.

The precipitated silica capable of being obtained by using a nozzle atomizer is generally in the form of substantially spherical beads.

At the end of such drying, a stage of milling may be undertaken on the product recovered. The precipitated silica which is then obtainable is generally in the form of a powder.

When the drying is carried out with a turbine atomizer, the precipitated silica which is then obtained is generally in the form of a powder.

Finally, the product which has been dried (especially by a turbine atomizer) or milled as mentioned above may eventually be subjected to an agglomeration stage, which consists for example in direct compression, wet-route granulation (that is to say with the use of a binder such as water, silica slurry, etc.), extrusion and, preferably, dry compacting. When this last technique is used it may be found advantageous, before starting the compacting, to deaerate the pulverulent products (an operation which is also called predensifying or degassing), so as to remove the air included therein and to ensure a more uniform compacting.

The precipitated silica which can be obtained according to this agglomeration stage is usually in the form of granules.

The inorganic filler, preferably the precipitated silica, and the conjugated diene compound of formula (I) could be mixed together before their use in the elastomer composition. In a first embodiment, the conjugated diene compound of formula (I) is not grafted on said inorganic filler. In a second embodiment, the conjugated diene compound of formula (I) is grafted on said inorganic filler.

They could be separately introduced in the elastomer composition.

The elastomer compositions wherein the conjugated diene compound of formula (I) and the inorganic filler, preferably the precipitated silica, are used could contain at least one recovering of such inorganic filler.

Moreover, the elastomer compositions wherein the conjugated diene compound of formula (I) and the inorganic filler, preferably the precipitated silica, are used may possibly contain another inorganic filler - elastomer coupling agent, in particular a sulphurated or polysulphurated silane, such as for example :
- bis-triethoxysilylpropyl disulphide (TESPD)
- bis-triethoxysilylpropyl tetrasulphide (TESPT)
- bis-monohydroxydimethylsilylpropyl tetrasulphide
- bis-monoethoxydimethylsilylpropyl disulphide (MESPD)
- bis-monoethoxydimethylsilylpropyl tetrasulphide (MESPT)
- bis-monoethoxydimethylsilylisopropyl tetrasulphide (MESiPrT)

However, preferably, the elastomer compositions do not comprise inorganic filler - elastomer coupling agent in addition to the conjugated diene compound of formula (I).

Advantageously, the elastomer composition used in the present invention comprises at least one isoprene elastomer.

According to an embodiment, such elastomer composition may preferably not comprise other elastomer(s) than the isoprene elastomer(s).

According to another embodiment, such elastomer composition may possibly comprise, in addition to the isoprene elastomer(s), at least one elastomer other than isoprene elastomer. In particuler, the elastomer composition may contain at least one isoprene elastomer (natural rubber for example) and at least one diene elastomer other than isoprene elastomer, the amount of isoprene elastomer(s) with respect to the total amount of elastomer(s) being then, preferably, greater than 50 % (generally less than 99.5 %, and for example between 70 and 99 %) by weight.

The isoprene elastomers that could be used for the elastomer compositions in accordance with the invention are more specifically chosen from :
(1) the synthetic polyisoprenes obtained by homopolymerization of isoprene or 2-methyl-1,3-butadiene ;
(2) the synthetic polyisoprenes obtained by copolymerization of isoprene with one or more ethylenically unsaturated monomers chosen from :
   (2.1) conjugated diene monomers, other than isoprene, containing from 4 to 22 carbon atoms, for instance 1,3-butadiene, 2,3-dimethyl-1,3-butadiene, 2-chloro-1,3-butadiene (or chloroprene), 1-phenyl-1,3-butadiene, 1,3-pentadiene, 2,4-hexadiene ;
   (2.2) aromatic vinyl monomers containing from 8 to 20 carbon atoms, for instance styrene, ortho-, meta- or para-methyl styrene, the commercial mixture "vinyltoluene", para-tert-butylstyrene, methoxy-styrenes, chlorostyrenes, vinylmesitylene, divinylbenzene, vinylnaphthalene ;
   (2.3) vinyl nitrile monomers containing from 3 to 12 carbon atoms, for instance acrylonitrile or methacrylonitrile;
   (2.4) acrylic ester monomers derived from acrylic acid or methacrylic acid with alkanols containing from 1 to 12 carbon atoms, for instance methyl acrylate, ethyl acrylate, propyl acrylate, n-butyl acrylate, isobutyl acrylate, 2-ethylhexyl acrylate, methyl methacrylate, ethyl methacrylate, n-butyl methacrylate or isobutyl methacrylate;
   (2.5) a mixture of several of the abovementioned monomers (2.1) to (2.4) ; the polyisoprene copolymers containing between 20 and 99 % by weight of isoprene units and between 80 and 1 % by weight of diene, aromatic vinyl, vinyl nitrile and/or acrylic ester units, and consisting, for example, of poly(isoprene-butadiene), poly(isoprene-styrene) and poly(isoprene-butadiene-styrene) ;
(3) natural rubber ;
(4) the copolymers obtained by copolymerization of isobutene and isoprene (butyl rubber), and also the halogenated versions, in particular the chlorinated or brominated versions, of these copolymers ;
(5) a mixture of several of the abovementioned elastomers (1) to (4);
(6) a mixture containing more than 50 % (preferably less than 99.5 %, and for example from 70 to 99 %) by weight of abovementioned elastomer (1) or (3) and less than 50 % (preferably more than 0.5 %, and for example from 1 to 30 %) by weight of one or more diene elastomers other than isoprene elastomers.

The expression "diene elastomer other than isoprene elastomer" means, as is known, for example : the homopolymers obtained by polymerization of one of the conjugated diene monomers defined above in point (2.1), for instance polybutadiene and polychloroprene; the copolymers obtained by copolymerization of at least two of the abovementioned conjugated dienes (2.1) with each other or by copolymerization of one or more of the abovementioned conjugated dienes (2.1) with one or more of the abovementioned unsaturated monomers (2.2), (2.3) and/or (2.4), for instance poly(butadiene-styrene) and poly(butadiene-acrylonitrile); ternary copolymers obtained by copolymerization of ethylene, of an α-olefin containing from 3 to 6 carbon atoms with a non-conjugated diene monomer containing from 6 to 12 carbon atoms, for instance the elastomers obtained from ethylene or propylene with a non-conjugated diene monomer of the abovementioned type such as, especially, 1,4-hexadiene, ethylidene-norbornene, dicyclopentadiene (EPDM elastomer).

Use is preferentially made of one or more isoprene elastomers chosen from :
(1) synthetic polyisoprene homopolymers ;
(2) synthetic polyisoprene copolymers consisting of poly(isoprene-butadiene), poly(isoprene-styrene) and poly(isoprene-butadiene-styrene) ;
(3) natural rubber;
(4) butyl rubber;
(5) a mixture of the abovementioned elastomers (1) to (4) ;
(6) a mixture containing more than 50 % (preferably less than 99.5 %, and for example from 70 to 99 %) by weight of abovementioned elastomer (1) or (3) and less than 50 % (preferably more than 0.5 %, and for example from 1 to 30 %) by weight of diene elastomer other than isoprene elastomer, consisting of polybutadiene, polychloroprene, poly(butadiene-styrene), poly(butadiene-acrylonitrile) and a terpolymer (non-conjugated ethylene-propylene-diene monomer).

Use is more preferentially made of one or more isoprene elastomers chosen from : (1) synthetic polyisoprene homopolymers ; (3) natural rubber; (5) a mixture of the abovementioned elastomers (1) and (3) ; (6) a mixture containing more than 50 % (preferably less than 99.5 %, and for example from 70 to 99 %) by weight of abovementioned elastomer (1) or (3) and less than 50 % (preferably more than 0.5 %, and for example from 1 to 30 %) by weight of diene elastomer other than isoprene elastomer, consisting of polybutadiene and poly(butadiene-styrene).

According to a preferred embodiment, the elastomer composition comprises at least natural rubber, and even only natural rubber, as isoprene elastomer.

According to another preferred embodiment, the elastomer composition comprises only natural rubber as elastomer.

The elastomer compositions carried out in accordance with the invention may also contain other auxiliary additives and constituents usually used in the field of elastomer compositions.

Thus, all or some of the following other constituents and additives may be used : curing agents (such as sulfur and sulfur-donating compounds, for instance thiuram derivatives) ; curing accelerators (for instance guanidine or thiazole derivatives) ; curing activators (for instance stearic acid, zinc stearate and zinc oxide, which may be sequentially added during the preparation of the composition) ; carbon black ; protecting agents (for instance antioxidants and/or antiozonizers, for instance N-phenyl-1-N'-(1,3-dimethylbutyl)-p-phenylenediamine) ; antireversion agents, for instance hexamethylene-1,6-bis(thiosulfate) or 1,3-bis(citraconimidomethyl)benzene ; and plasticizers.

The elastomer composition obtained by the use according to the invention contains an effective amount of conjugated diene compound of formula (I).

More particularly, the elastomer compositions from the invention may comprise (parts in weight), per 100 parts of elastomer(s) :
from 10 to 200 parts, in particular from 20 to 150 parts, for example from 30 to 110 parts or from 30 to 75 parts, of inorganic filler, preferably precipitated silica ;
from 1 to 20 parts, in particular from 2 to 20 parts, for example from 2 to 12 parts or from 2 to 10 parts, of conjugated diene compound of formula (I).

Preferably, the used amount of conjugated diene compound of formula (I), in particular chosen within the above-emntioned ranges, is determined such that it generally represents from 1 to 20 %, in particular from 2 to 15 %, for example from 4 to 12 %, by weight with respect to the used amount of the inorganic filler.

The elastomer compositions carried out in accordance with the invention, and which are also one of the objects of the invention, can be prepared according to any standard procedure, in particular in two phases. A first phase (known as the "non-productive step") is a phase of thermo-mechanical work at high temperature. It is followed by a second phase of mechanical work (known as the "productive step") at temperatures generally lower than 110 °C, in which the curing system is added.

The elastomer compositions (carried out) in accordance with the invention could be used for shoe soles, floorings, gas barrier systems, flame retardance materials, cable car rollers, seals for household electrical appliances, seals for liquid or gas ducts, seals for braking systems, (flexible) pipes, sheaths (in particular cable sheaths), cables, motor supports, conveyor beltings, driving belts, or, preferably, tires (in particular tire treads), and advantageously (in particular when the elastomer compositions contain at least one isoprene elastomer) tires for heavy vehicles, such as trucks.

The present invention also relates to articles, finished (processed) or semifinished (semi-processed), comprising at least one elastomer composition according to the invention (especially when it contains at least one isoprene elastomer, for example natural rubber), and in particular to the above-mentioned articles.

The present invention also relates to the use as defined above, wherein the elastomer composition is intended for tires (for example tire treads), in particular tires for heavy vehicles, especially when this composition contains at least one isoprene elastomer, for example natural rubber.

The present invention also relates to solid articles, especially shaped or moulded elastomeric articles, comprising a composition as defined above, said articles being for example tires, in particular tires for heavy vehicles, for example truck tires, especially when the composition contains at least one isoprene elastomer, for example natural rubber.

The following examples give a typical illustration of some coupling agents useful according to the invention.

### EXAMPLES

### Example 1

Into a 500 ml flask was added 66 g of H₃PO₂ (50% in water), 49 g of mesityl oxide and 100 ml of toluene were added. The mixture was heated under nitrogen to reflux for 24 hours. ³¹P NMR showed that 82.6% H₃PO₂ was reacted and 4-methyl-2,4-pentadiene-2-phosphinic acid (PiDM) was obtained at 68.5% selectivity along with other minor impurities after 6 hours of azeotropic distillation of water. The reaction was continued for 24 hours to get 97.3% conversion of H₃PO₂ and 44.4% selectivity to 4-methyl-2,4-pentadiene-2-phosphinic acid (PiDM). The reaction mixture was cooled down to room temperature and the leftover solvent was removed on a rotary evaporator. The residual was dissolved in 200 ml dichloromethane and the solution was washed with 100 ml of water three times. The combined dichloromethane phase was dried with anhydrous Na₂SO₄ and the solvent was evaporated to yield 46.5 g yellow viscous oil at a crude yield of 63.7% and purity of 71% PiDM.

### Example 2

Into a 1 L three-necked round flask, protected under nitrogen, was charged with 107.8 g of mesityl oxide, 132 g of H₃PO₂ (50%) and 400 ml of toluene. The system was flushed with nitrogen and heated to reflux. Water was distilled out as azeotropic mixture with toluene. The reaction was continued for 20 hours until ³¹P NMR showed all H₃PO₂ was consumed. The reaction mixture was cooled down to room temperature and washed with 400 ml of water and then the extracted with diluted NaOH solution. The aqueous phase was then acidified with 4 N HCl to pH 1 and back extracted with 50 ml dichloromethane. The organic phase was collected, dried over anyhydrous Na₂SO₄ and evaporated to give 68.5 g of bright yellow oil was. ³¹P NMR showed 89.7% by mole was PiDM at a crude yield of 46.9%.

### Example 3

A polymer was obtained by polymerization of purified PiDM from Example 2 at room temperature. The polymer was isolated by precipitation from toluene. Thus PiDM 40 g was dissolved into 100 ml of toluene. 0.1 g of AIBN (azobisisobutyronitrile) was charged in 3 portions under nitrogen atmosphere at 80°C over 3 hours. After stirring for further 1 hour at the same temperature, the precipitate was then filtered and dried to obtain 30 g of pale yellow solid polymer. The polymer may be cured in 10% NaOH solution for 2 days and then turned into a water-swelled gel.

### Example 4

Phosphorous acid, 10 g, dried for 4 hours at 50°C under vacuum and 14.2 g of mesityl oxide of mixed isomers were mixed in a flask at 28°C. The mixture turned black and ³¹P NMR showed 90% of phosphorous acid was reacted. Then 24.7 g of acetic anhydride was added slowly with mixing over 45 min while the temperature was kept at about 28°C. The mixture was heated to 48°C for 4 hrs. 98% H₃PO₃ conversion was observed with 86% selectivity for PoDM and its anhydride derivatives.

### Example 5

H₃PO₃ was dried for about 4 hrs at 50°C under vacuum. 10g of dried H₃PO₃ and 12.43 g of mesityl oxide were mixed in a flask at 28-30 °C. Then 24.7 g of acetic anhydride was added slowly with mixing over 50 mins while the reaction temperature was kept below 30°C. The mixture was kept stirring at this temperature for 4 hrs. ³¹P NMR showed 81.2% conversion of H₃PO₃ and 86% selectivity for PoDM and its anhydride derivatives.

### Example 6

Into a one-necked 100ml round bottomed flask was added 10g of PoDm monomer from example 5. The monomer was heated to 100°C and aged for 5h. Once the ageing step was completed, the flask was cooled to room temperature. Analysis by ¹H NMR revealed 87% of PoDM had been converted into an oligomeric form.

The compounds as prepared in the above examples may especially be used as coupling agent between an inorganic filler, such as precipitated silica, and an elastomeric polymer, like a natural rubber, for example.

### Application Examples

In an internal mixer (Brabender - 70 ml), the following rubber compositions have been prepared where the constitution is expressed in weight part for 100 weight part of rubber (or phr). The Table I gives the compositions:

**Table I**

| Composition n° | Standard | Example A | |
|---|---|---|---|
| NR (1) | 100 | 100 | |
| Silica (2) | 50 | 50 | |
| Coupling agent selected | - | 2,2 | |
| from the invention (3) | | | |
| ZnO | 3 | 3 | |
| Stearic acid | 2 | 2 | |
| Antioxydant 1 (4) | 1,9 | 1,9 | |
| Antioxydant 2 (5) | 1,0 | 1,0 | |
| Carbon black (N330) | 3,0 | 3,0 | |
| CBS (6) | 1,5 | 1,5 | |
| Sulfur | 2,0 | 2,5 | |

Legend:
(1) Natural rubber SMR 5 - CV60 (supplied by Safic-Alcan).
(2) Highly dispersible Silica Z1165MP (supplied by Rhodia)
(3) Coupling agent: 4-methyl-2,4-pentadiene-2-phosphinic acid (PiDM)
(4) N-1,3-dimethylbutyl-N-phenyl-para-phenylenediamine (Santoflex 6-PPD from Flexsys).
(5) 2,2,4-trimethyl-1H-quinoline (Permanax TQ from Flexsys)
(6) N-cyclohexyl-2-benzothiazyl-sulfenamide (Rhenogran CBS-80 from RheinChemie).

### 1) Preparation of the rubber compositions

The process to elaborate the elastomeric compositions is lead in two consecutive stages. The first stage is a thermo-mechanical step at high temperatures called non-productive stage (NP). The second one is a thermo-mechanical step at lower temperatures (typically below 110°C) called productive stage (P) in order to introduce the vulcanization package (sulfur, accelerators,..).

The first stage is elaborated with a mixing tool named internal mixer (Brabender with a capacity of 70 ml). The filling factor is 0,75. The initial temperature and the rotor speed are fixed each time in order to reach a dump temperature close to 150 - 170°C.

Fractioned here in two steps, it affords to incorporate in a first step (NP1), the elastomer next the reinforcing filler (partitioned) with the coupling agent and the stearic acid. This duration is between 4 to 10 minutes.

After cooling of the rubber compounds (temperature below 100°C), a second step (NP2) allows to introduce the zinc oxide, the antioxidants (6-PPD for example). The duration is between 2 to 5 minutes.

After cooling of the rubber compounds (temperature below 100°C), the second stage (P) allows to introduce the vulcanization package (sulphur, accelerator,..). Elaborated here on a open-mill (initial temperature 50°C), the duration is between 2 to 6 minutes.

The final rubber compounds are next calendared under rubber sheets with a thickness of 2 - 3 mm.

On these rubber compounds called green compounds, a evaluation of their rheological properties allows to optimise the duration and the temperature of the vulcanization.

Next, the mechanical and dynamical properties are evaluated on the cured rubber compounds, vulcanized at the optimal time (t98).

### 2) Rheology of the rubber compounds

The experiment is made on the green compounds. In table II, all results related to the rheological behaviour is shared. The tool is a MDR-type (DMDR3000 from Montech) with a temperature of 150°C during 30 minutes and following the standard DIN 53529.

From the curve (Elastic torque - S' - in function of the duration time), some specific values are extracted :
- the minimal torque (mT) in dN.m,
- the maximal torque (MT) in dN.m,
- the scorch time (ts2) in minutes, which is associated to the duration to have an increase of 2 points for the minimal torque,
- the optimal time (t98) in minutes , which is the duration where 98% of the vulcanisation is completed. This duration is used here to vulcanizate the green rubber compounds.

All results are consolidated in the table II.

**Table II**

| Composition n° | Standard | Example A |
|---|---|---|
| mT (dN.m) | 2,7 | 1,8 |
| MT (dN.m) | 14,0 | 12,2 |
| TS 2 (min) | 5,4 | 8,4 |
| T98 (min) | 25,9 | 20,8 |

The new coupling agent used in the present invention (Example A) doesn't degrade the behaviour in vulcanization and allows to have a better control of the vulcanization with a larger scorch time (larger TS2) and lower optimal time (t98) when the comparison is expressed versus the standard.

### 3) Mechanical properties of the cured rubber compounds :

The measurements are made on the elastomeric compositions, vulcanized at 150°C and the optimal time (t98).

For the tensile tests, the mechanical properties are performed using INSTRON 5564 on cured compounds following the standard NF ISO 37 with H2-geometry and a speed of 500 mm/min.. Characteristics extracted from stress-strain curves are the modulus at x% (M10, M100 and M300), expressed in MPa, as well as the ultimate properties Tensile Strength (TS), expressed in MPa, and Elongation at Break (EB), expressed in %.

It is also possible to express a reinforcement index (RI) which is the ratio between M300 and M100. This index gives information about the reinforcement behaviour of the composition and the effectiveness of coupling agent to link the filler (here silica) and the elastomer (here natural rubber).

Hardness (Shore A) is measured at room temperature (ASTM D2240). The given value (in points) is measured after 15 seconds.

The mechanical properties are consolidated in the table III.

**Table III**

| Composition n° | Standard | Example A |
|---|---|---|
| M10 (MPa) | 0,47 | 0,49 |
| M100 (MPa) | 1,04 | 1,44 |
| M300 (MPa) | 4,36 | 6,96 |
| TS (MPa) | 15,2 | 23,08 |
| EB (%) | 568 | 603 |
| RI = 300/100 | 4,2 | 4,8 |
| Hardness - Shore A (pts) | 45 | 52 |

The new coupling agent used in the present invention (Example A) allows having a consequent increase of the reinforcement behaviour with higher M300 and reinforcement index (RI) when the comparison is expressed versus the standard.

### 4) Dynamical properties of the cured rubber compounds:

To study the dynamic properties, a Metravib VA3000 analyzer is used following the standard ASTM D5992.

The loss factor (tan δ) and the complex modulus (E*) are recorded on cured rubber compounds with a geometry of cylindrical form (section of 95 mm² and height of 14 mm). The samples are sollicitated in compression mode at 10 Hz under a temperature of 60°C. Test is done after a static pre-strain of 10% and dynamic double strain amplitude of 4%.

The mechanical properties are consolidated in the table IV with the complex modulus (E* - 60°C - 10 Hz) and the loss factor (tan δ - 60°C - 10 Hz).

**Table IV**

| Composition n° | Standard | Example A |
|---|---|---|
| E* - 60°C -10 Hz (MPa) | 32,4 | 34,1 |
| Tan δ - 60°C - 10 Hz | 0,162 | 0,115 |

The use of the coupling agent of the present invention (Example A) allows to have a consequent decrease of the hysteresis behaviour with lower value of tan δ at 60°C when the comparison is expressed versus the standard.

The examination of the tables from II to IV shows that the rubber composition, linked to the new coupling agent used in the present invention (Example A) allows to improve the mechanical reinforcement and the hysteresis properties at 60°C related to the standard composition (standard).

One consequence for the claimed coupling agent is to lead to an improvement of the compromise between wear resistance and rolling resistance when the elastomer composition is used for Tire application (for example : Passenger Car, Light Truck, Truck, Heavy-Load, ...) and for several part of the Tire (like : Tread, Subtread, Belt, Sidewall, Bead, Carcass, Casing, Innerliner, ...).

## Claims

1. The use, in an elastomer composition, of an inorganic filler with a compound having the following formula (I), said compound of formula (I) being optionally, in all or part, in a polymerized form: 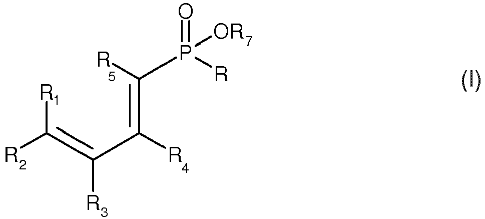
wherein R is R₆ or OR₈,
each of R₁, R₂, R₃, R₄, R₅, and R₆ is independently selected from: hydrogen, alkyl, aryl, alkaryl, aralkyl, cycloalkyl, heterocycloalkyl, and alkenyl groups, and
each of R₇ and R₈ is independently selected from: hydrogen, alkyl, aryl, alkaryl, aralkyl, cycloalkyl, alkenyl groups, and metals selected from the group consisting of Na, Li, and Ca, wherein the compound of formula (I), which is optionally, in all or part, in a polymerized form, is used as a coupling agent between the inorganic filler and the elastomer.

2. The use of claim 1, wherein the elastomer composition comprises at least one isoprene elastomer, for example natural rubber.

3. The use of any of claim 1 or 2, wherein all of part of the compound of formula (I) is in the form of polymer having a polymerisation index below 20, more preferably below 10.

4. The use of any one of claims 1 to 3, wherein R is R₆.

5. The use of any one of claims 1 to 3, wherein R is OR₈.

6. The use of any one of claims 1 to 5, wherein R₁, R₂ and R₄ are H.

7. The use of any one of claims 1 to 6, wherein R₃ and R₅ are methyl.

8. The use of any one of claims 1 to 7, wherein the inorganic filler is a precipitated silica.

9. The use of any one of claims 1 to 8, wherein the inorganic filler is an aluminium-containing precipitated silica, which has preferably an aluminium content greater than 0.5 % by weight.

10. A composition comprising (i) an elastomer, preferably an isoprene elastomer such as a natural rubber, (ii) an inorganic filler and (iii) a compound having the formula (I) as defined in claim 1, said compound of formula (I) being optionally, in all or part, in a polymerized form.

11. A solid article, based on the composition of claim 10, said article being preferably a tire, for example a tire for heavy vehicles.

## Patentansprüche

1. Verwendung eines anorganischen Füllstoffs mit einer Verbindung mit der folgenden Formel (I) in einer Elastomerzusammensetzung, wobei die Verbindung der Formel (I) gegebenenfalls ganz oder teilweise in polymerisierter Form vorliegt : 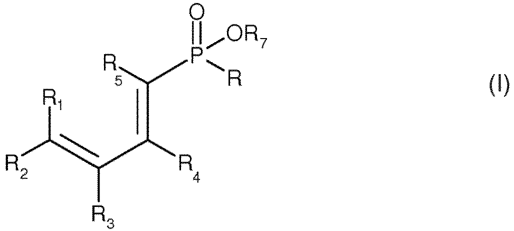
wobei R für R₆ oder OR₈ steht,
R₁, R₂, R₃, R₄, R₅ und R₆ jeweils unabhängig aus Wasserstoff, Alkyl-, Aryl-, Alkaryl-, Aralkyl-, Cycloalkyl-, Heterocycloalkyl- und Alkenylgruppen ausgewählt sind und
R₇ und R₈ jeweils unabhängig aus Wasserstoff, Alkyl-, Aryl-, Alkaryl-, Aralkyl-, Cycloalkyl- und Alkenylgruppen und Metallen aus der Gruppe bestehend aus Na, Li und Ca ausgewählt sind,
wobei die Verbindung der Formel (I), die gegebenenfalls ganz oder teilweise in polymerisierter Form vorliegt, als Kupplungsmittel zwischen dem anorganischen Füllstoff und dem Elastomer verwendet wird.

2. Verwendung nach Anspruch 1, wobei die Elastomerzusammensetzung mindestens ein Isoprenelastomer, beispielsweise Naturkautschuk, umfasst.

3. Verwendung nach Anspruch 1 oder 2, wobei die Verbindung der Formel (I) ganz oder teilweise in Form von Polymer mit einem Polymerisationsindex unter 20, weiter bevorzugt unter 10, vorliegt.

4. Verwendung nach einem der Ansprüche 1 bis 3, wobei R für R₆ steht.

5. Verwendung nach einem der Ansprüche 1 bis 3, wobei R für OR₈ steht.

6. Verwendung nach einem der Ansprüche 1 bis 5, wobei R₁, R₂ und R₄ für H stehen.

7. Verwendung nach einem der Ansprüche 1 bis 6, wobei R₃ und R₅ für Methyl stehen.

8. Verwendung nach einem der Ansprüche 1 bis 7, wobei es sich bei dem anorganischen Füllstoff um eine Fällungskieselsäure handelt.

9. Verwendung nach einem der Ansprüche 1 bis 8, wobei sich bei dem anorganischen Füllstoff um eine aluminiumhaltige Fällungskieselsäure handelt, die vorzugsweise einen Aluminiumgehalt von mehr als 0,5 Gew.-% aufweist.

10. Zusammensetzung, umfassend (i) ein Elastomer, vorzugsweise ein Isoprenelastomer wie einen Naturkautschuk, (ii) einen anorganischen Füllstoff und (iii) eine Verbindung mit der Formel (I) gemäß Anspruch 1, wobei die Verbindung der Formel (I) gegebenenfalls ganz oder teilweise in polymerisierter Form vorliegt.

11. Fester Artikel auf Basis der Zusammensetzung nach Anspruch 10, wobei es sich bei dem Artikel vorzugsweise um einen Reifen, beispielsweise einen Reifen für Schwerfahrzeuge, handelt.

## Revendications

1. Utilisation, dans une composition élastomère, d'une charge inorganique avec un composé ayant la formule (I) suivante, ledit composé de formule (I) étant éventuellement, en totalité ou en partie, sous une forme polymérisée : 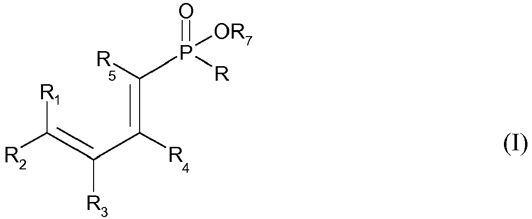
dans laquelle R représente R₆ ou OR₈,
R₁, R₂, R₃, R₄, R₅ et R₆ sont chacun choisis indépendamment parmi : les groupes hydrogène, alkyle, aryle, alkaryle, aralkyle, cycloalkyle, hétérocycloalkyle et alcényle, et
R₇ et R₈ sont chacun choisis indépendamment parmi : les groupes hydrogène, alkyle, aryle, alkaryle, aralkyle, cycloalkyle, alcényle, et les métaux choisis dans le groupe constitué par Na, Li et Ca, dans laquelle le composé de formule (I), qui est éventuellement, en totalité ou en partie, sous une forme polymérisée, est utilisé en tant qu'agent de couplage entre la charge inorganique et l'élastomère.

2. Utilisation selon la revendication 1, dans laquelle la composition élastomère comprend au moins un élastomère d'isoprène, par exemple le caoutchouc naturel.

3. Utilisation selon l'une quelconque des revendications 1 ou 2, dans laquelle la totalité ou une partie du composé de formule (I) est sous la forme d'un polymère ayant un indice de polymérisation inférieur à 20, de manière davantage préférée inférieur à 10.

4. Utilisation selon l'une quelconque des revendications 1 à 3, dans laquelle R représente R₆.

5. Utilisation selon l'une quelconque des revendications 1 à 3, dans laquelle R représente OR₈.

6. Utilisation selon l'une quelconque des revendications 1 à 5, dans laquelle R₁, R₂ et R₄ représentent H.

7. Utilisation selon l'une quelconque des revendications 1 à 6, dans laquelle R₃ et R₅ représentent méthyle.

8. Utilisation selon l'une quelconque des revendications 1 à 7, dans laquelle la charge inorganique est une silice précipitée.

9. Utilisation selon l'une quelconque des revendications 1 à 8, dans laquelle la charge inorganique est une silice précipitée contenant de l'aluminium, qui a de préférence une teneur en aluminium supérieure à 0,5 % en poids.

10. Composition comprenant (i) un élastomère, de préférence un élastomère d'isoprène tel qu'un caoutchouc naturel, (ii) une charge inorganique et (iii) un composé de formule (I) telle que définie dans la revendication 1, ledit composé de formule (I) étant éventuellement, en totalité ou en partie, sous une forme polymérisée.

11. Article solide, à base de la composition selon la revendication 10, ledit article étant de préférence un pneu, par exemple un pneu pour véhicules lourds.
